Europäisches Patentamt

European Patent Office

Office européen des brevets

(11) Publication number: **0 411 557 A2**

# EUROPEAN PATENT APPLICATION

(21) Application number: **90114662.1**

(22) Date of filing: **31.07.90**

(51) Int. Cl.⁵: **G01N 21/64**

(30) Priority: **03.08.89 IT 2143489**

(43) Date of publication of application:
**06.02.91 Bulletin 91/06**

(84) Designated Contracting States:
**AT DE FR GB IT**

(71) Applicant: **Bardelli, Marcella**

**Milano(IT)**

(72) Inventor: **Bardelli, Marcella**

**Milano(IT)**

(74) Representative: **Mayer, Hans Benno, Dipl.-Ing.
de Dominicis & Mayer S.r.l. Piazzale
Marengo, 6, 6
I-20121 Milano(IT)**

(54) **Photometric method and device for the analysis of samples treated with fluorescent reagents.**

(57) A photometric method and device for the analysis of biological samples treated with fluorescent reagents are proposed.

The method provides for the excitation of the sample contained in a test tube by one or more radiations of predetermined wavelengths, and the measurement of the radiations emitted by fluorescence by a count of the individual photons emitted by an appropriate fraction of the surface of emission under consideration, to avoid the effect of the edge reflection.

The device provides an illuminator to excite the molecules of the fluorescent reagent, and an avalanche photodetector which receives the radiation emitted through an inverted microscope, of the reflection or refraction type.

FIG. 1

# PHOTOMETRIC METHOD AND DEVICE FOR THE ANALYSIS OF SAMPLES TREATED WITH FLUORESCENT REAGENTS

## Description of the invention

The present invention relates to a photometric method and device for the analysis of samples treated with fluorescent reagents, in particular for immunological analyses on a biological fluid typically blood serum, in which it is desired to measure extremely small quantities of a given substance.

The biomedical analyses of this type are currently performed using three different methods, as well as pertinent devices. The radioimmunological or RIA (radioactive immunoassay) method of measurement provides the use of radioactive isotopes which are selectively linked to the molecules of the material to be determined and the subsequent measurement of the radioactivity emitted.

The radioimmunological methods have a high sensitivity as the measurement is based on discreet events (isotopic disintegration) to which the statistical distribution law is applicable, thus permitting the compensation of the disturbances (so-called background noise) of the system which are due in this case to the emission of radiation not derived from the isotope.

However, this method exhibits two fundamental disadvantages. Firstly, it is necessary to use isotopes having a relatively short lifetime, and this limits, in terms of time, the validity of the analyses. A second disadvantage, which is becoming progressively more serious is that of the elimination of the radioactive residues, with the consequent problems of an ecological and economic nature. Thus, other techniques are in use, which are based respectively on chemiluminescence and on fluoroluminescence, which do, however, require the measurement of extremely small quantities of light radiation at particular wavelengths.

Consequently, the sensitivity limit of these methods is determined by the total background noise of the measurement system, and in particular the method which utilizes chemiluminescence (or CIA) does not seem to have the prospect of having extensive use, on account of the limited sensitivity.

However, greater promise is shown by the method of measurement which utilizes fluoroluminescence (FIA) and which ·is based on the use of fluorescent substances which are attached to the molecules of the substance to be detected, and which, when they are subsequently excited by an appropriate illumination, emit one or more light radiations proportional to the quantity of substance present in the sample.

Nevertheless, the sensitivity of measurement of the radioimmunological methods is still far greater, typically 2-3 orders of magnitude as compared with those which utilize fluoroluminescence.

Thus, in the FIA methods, it has been proposed to have recourse to an intermediate stage of enzymatic multiplication of the sample. In other words, the molecule to be assayed is caused to react with a specific enzyme, which is subsequently in a position to activate the fluorescent reagent, which is also referred to as a fluorophore hereinbelow. Before activating the reagent, the said enzyme is caused to multiply in a controlled environment, so as to increase the quantity thereof, and consequently to increase the quantity of fluorophore which is subsequently fixed, and therefore finally the radiation emitted by the sample. Nevertheless, although this technique does on the one hand solve the problem of increasing the sensitivity, on the other hand it proves to be rather complex, introducing an additional stage, as well as costly on account of the presence of the reagents and, as it increases the analysis times, it inevitably involves an increase in the costs of implementation.

Furthermore, the enzymatic multiplication may introduce a high degree of uncertainty in that the rate of reproduction of the enzyme is a function of the temperature and the enzyme under oes various cycles of doubling before the reaction with the fluorophore.

Thus, in the event that the temperature of the sample is not rigorously controlled (with an accuracy of the order of one tenth of a degree), the measurements may be affected by a considerably uncertainty.

Thus, at the present stage, the biomedical analyses which utilize fluoroluminescence prove to have considerably less sensitivity than the radioimmunological methods of measurement, or make use of enzymatic multiplication, with the alternatives, in this case, of having to choose between a reduced coefficient of amplification or an uncertainty of the measurement which is rather large or to use instruments having a very high cost.

For high-sensitivity detection, use is made of photomultiplier tubes in the configuration which is conventional for nuclear photodetectors (for example coupled to scintillator crystals) or silicon photodiodes, coupled to an optical system which enlarges the image of the emitting surface and the gate to the photomultiplier.

Another disadvantage of the known devices which utilize fluorescence resides in the fact that the device, making use of an optical enlarger, produces a measurement which is a function which can be greatly influenced by the level of the liquid in the test tubes in which it is contained. This level may undergo a variation even of the order of one millimeter, either as a result of errors of metering or as a result of evaporation phenomena. It would therefore be necessary to carry out a continuous verification of the focusing as a function of the level of the liquid, otherwise a certain further uncertainty in the measurement is inevitable.

A further problem in the sector of biomedical analyses derives from the fact that some measurements, even frequent ones, relate to substances which are present in the liquid to be examined in relatively large quantities, for example certain hormones such as testosterone. In these cases, the known processes and apparatuses prove to be unsuitable and even incapable of adaptation for the measurements, on account of the saturation phenomena which occur when the apparatus, which is very sensitive, is used to measure these (relatively) large quantities.

The object of the present invention is therefore to overcome the disadvantages and the limitations of the prior art which has been illustrated as regards the methods of measurement which utilize fluoroluminescence, and more specifically to provide a method and an associated device which has a very high sensitivity (of the same order of magnitude as the radioimmunological measurements), which does not require additional stages of treatment by enzymatic multiplication and the like, which is rapid to implement, and which provides a measurement which is substantially independent of the level of the sample in the test tube, and which finally is also capable of being adapted for use in the measurement of relatively large quantities of substances, when this is required.

These and further objects of the invention are achieved by means of the method illustrated in claim 1, and the device which forms the subject of claims 2 and 12.

These and further features and advantages of the invention will be evident from the description which follows, relating to a preferred embodiment of the device, which embodiment is illustrated in the accompanying figures, in which:

Figure 1 shows diagrammatically the measuring arrangement;

Figure 2 shows in greater detail, and on an enlarged scale, part of the device of Figure 1; and

Figure 3 shows a particular embodiment of the inverted microscope.

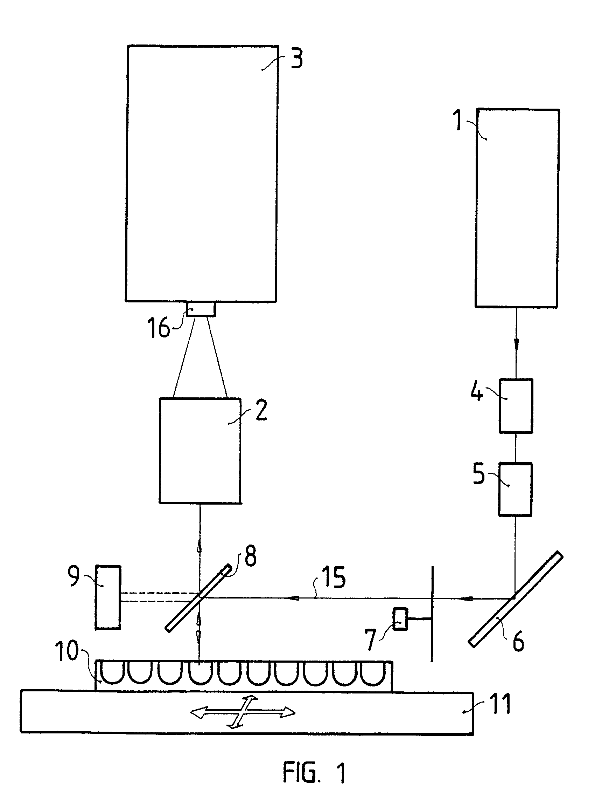

The device according to the invention, illustrated diagrammatically in Figure 1, comprises a table 11, movable in the horizontal sense along two perpendicular directions, on which table there are deposited the test tubes 10 containing the liquid to be assayed. What are involved are, in a known manner, strips of cylindrical test tubes of plastic material which are mounted on a suitable frame for carrying out the examination automatically.

The device comprises an illuminator to excite the fluorophores present in the substance, which illuminator is composed of a light source 1, and of components such as one or more filters 4, and of one or more optical systems for the processing of the illumination beam 5 (collimating optical systems) and of a mirror 6 which deflects the emerging beam through approximately 90°. The light source 1 which produces a beam of energy with wavelengths capable of exciting the fluorescence of the molecules of fluorophore which are present in the liquid of the sample 10, may be a laser lamp, an incandescent or discharge lamp, or a lamp of another type, associated with an optical system (optical systems plus filters) having features which are suitable for producing the emerging light beam with the characteristics which are required both from the point of view of geometry and from that of the selection of the wavelength or of the wavelengths.

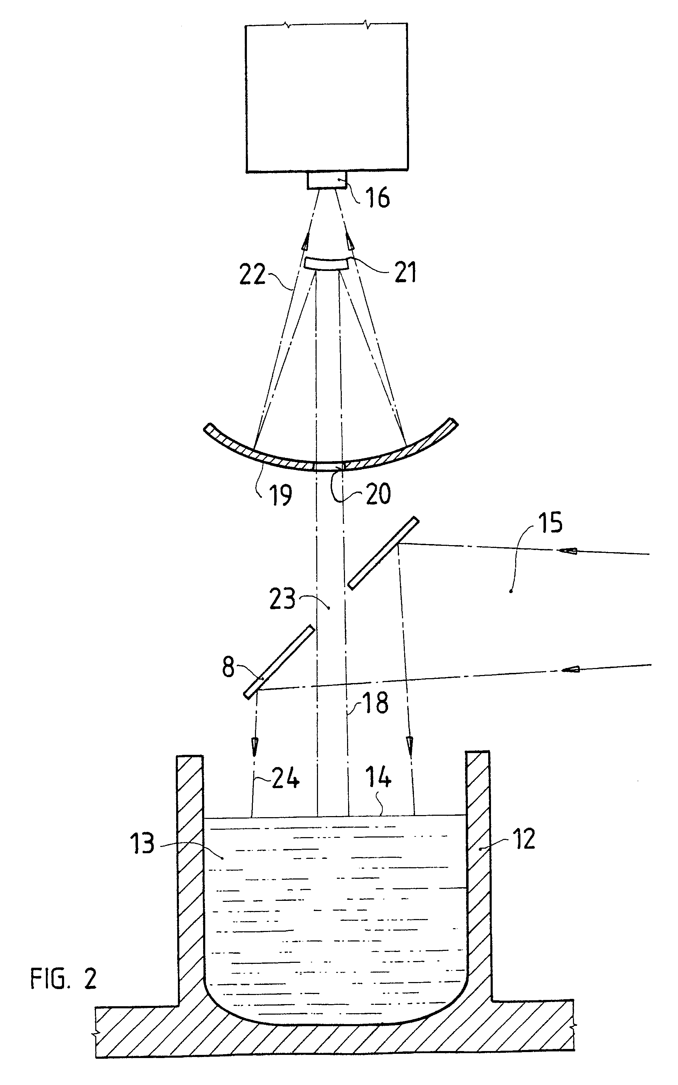

The beam emitted by the source, after having passed through the filters 4 and the optical systems 5, is deflected by the mirror 6, and then reflected by a semireflecting or perforated mirror 8 towards the sample below, so as to excite the molecules of fluorophore which are present in the said sample. The mirror 8 may be equipped with a perforation, as illustrated, for example, in the following Figure 2, or may be of the semireflecting type, and thus (substantially) reflecting for the illumination radiation and nevertheless transparent to the fluorescence radiation which is normally of greater wavelength.

Above the sample 8 there is provided a microscope optical system 2 which focuses the beam emitted from the sample, as will be illustrated in greater detail hereinbelow, on a photodiode 16, in particular an avalanche photodiode associated with an electronic processing unit 3, which is capable of counting the individual photons received.

The device may further provide a movable screen 7, for example constructed in mechanical form by means of an electric motor and a perforated disc, which serves to create the appropriate cycles of illumination and of darkness for the analysis of the sample. Alternatively, and as a function of the required characteristics of the exciting radiations, the said source 1 may operate in pulsed mode, so as to create an excitation pulse (illumination), followed by a pause during which the detection of the radiation emitted by fluorescence is carried out.

The device further provides a component 9 for the collection of the radiation which, via the mirror 8, is dispersed and does not reach the sample. Preferably, the radiation incident on such component 9 is measured and used for the regulation and the referencing of the illuminator.

With reference, now, in particular to Figure 2, which shows in enlarged form that part of the device included between the test tube 12 of a sample and the avalanche photodiode 16, there is shown the optical structure incorporating an inverted microscope according to the invention.

The beam of light 15 originating from the mirror 6 is incident on the surface of the mirror 8, which exhibits a perforation 23 and is reflected (beam 24) downwards, in such a manner as to irradiate substantially the entire sample of liquid 13 contained in the test tube 12 up to a level 14 which, as has been stated, may undergo variations even of the order of one millimeter, for various reasons.

The radiations of fluorescence emitted by the sample 13 below the perforation 23 of the mirror 8, and the perforation 20 of the mirror 19, give rise to a quasi-cylindrical beam of dimensions smaller than the area of the sample. Depending upon the optical systems employed as well, this beam may be also appreciably convergent or divergent, as long as its dimensions do not however exceed those of the perforations 20, 23 and of the mirror 21.

This beam is reflected, ty the spherical mirror 21 situated on the axis with respect to the perforations 23 and 20, onto the internal reflecting surface of the mirror 19, which focuses the radiations in a convergent beam 22 onto the avalanche photodiode 16. The substantially cylindrical beam defined by the two perforated mirrors (which together form an optical system which can be defined as a microscope objective of the mirror type), thus has a diameter which is approximately constant and independent of the position of the surface 14 of the liquid, and thus also of the distance of such surface 2 from the system of mirrors 19 and 21. In other words, the level 14 which functions as the object for the inverted microscope comes to be situated at a sufficiently great distance to make infinitesimal the variation of position of the image plane.

The device 7 for the interception of the illumination beam 15 may be of mechanical, optical or solid state type, and its purpose is to permit the application of techniques of interception of the signal to be detected, in such a manner as to permit the measurement just of the signal due to the background (or darkness) noise. If required, such device may also carry out a compensation of sensitivity, reducing the quantity of illumination in the case of fluorophores in relatively large quantities.

For example, during the intervals of darkness, it will be possible to count backwards, with appropriate weighting, the signals emitted by the photodiode for the purpose of statistically compensating the background noise counted by the photodiode during the phase of collection of the radiation.

From what has been stated hereinabove, it is clear how the method according to the invention provides the reduction, in contrast to the prior art, of the dimensions of the image to be analysed, thereby permitting the use as detector of an avalanche photodiode which is a particularly sensitive electronic device, which is capable of detecting individual photons, but with a structure having an extremely small area. The device according to the invention, on an indicative basis, permits the concentration in the focal plane of the microscope, of a small beam of the order of tenths of a micron.

As has been mentioned hereinabove, in numerous analyses of common type, the quantities of substances to be individually identified are relatively large (1-2 orders of magnitude in excess, for example). In these situations or for these uses, the device may be equipped with a different type of diode.

The circuitry indicated diagrammatically by 16 comprises, for example, means for counting the individual photons, associating with each one of these an electrical pulse which increments the value of a counter. A circuit which can be used for this purpose is, for example, the SPCM-100 module produced by RCA Inc Electro Optix.

Asa indicated, the optical system 2 is of the total reflection type, but it is possible to use a coupling optical system of the type of a conventional microscope, i.e. the refraction type or the mixed type (catadioptric).

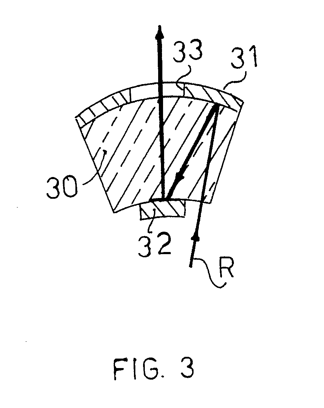

Figure 3 shows a particular embodiment of the inverted microscope, which embodiment is formed from a substantially spherical cap 30 of material transparent to the radiations concerned, for example glass or plastic, and equipped with two reflecting layers 31, 32 which are, for example, obtained by deposition of aluminium, gold or another suitable material, having a thickness of the order of a few hundreds of microns. The covering 31 exhibits a missing zone 33 corresponding to the reflecting covering 32 on the opposite surface, so as to permit the reflection of the beam R diagrammatically indicated in the figure.

Thus, the device permits a measurement of discontinuous type, with a sensitivity very much higher than the continuous methods previously used. Furthermore, an improved signal/noise ratio is obtained, by virtue of the possibility of use of statistical processing systems. Furthermore, there is an extensive immunity of the measurement to the level of the liquid in the test tube, which is normally variable, in a fairly random manner on account of the techniques of preparation of the biological sample in the phase of coupling of the fluorophore.

The test tubes containing the samples may be sealed by means of a cover or similar means, constructed of material transparent to the illumination and fluorescence radiations.

Using test tubes which are transparent (in relation to the illumination radiations) and possibly sealed, the illumination and the reading of the test tubes may take place through the possible sealing cover or alternatively laterally through the walls of the test tube, with evident simplification of the entire optical system.

Although a preferred embodiment of the invention has been illustrated in Fig. 1 for the measuring arrangement, other configuration can be used. For example it is possible to provide an horizontal disposition of tha illuminator and the detection device, or an horizontal disposition of only one of these devices is possible.

The sample can be illuminated perpendicularly to the liquid surface (without reflections) whereas the axis of the detection devioe can be slightly tilted, e. g. by 5-10˚, to avoid negative effects, deriving from anomalies of the meniscus.

The means for the photon counting can comprise an impulse counter with an adjustable clocking to carry out a sequence of readings, e. g. 50 readings, each one having a duration of 100 milliseconds, which are further subjected to the above mentioned statistical processing systems; the count reached in the first reading can be used to insert the device for reducing the amount of illumination.

Further to measuring the fluorescence light, the device according to the invention can be also used to carry out measurements relating to the color intensity.

## Claims

1. Method for the measurement of fluorescent light emitted by biological samples treated with a fluorophore reagent, comprising the phases of exciting the sample with a radiation of predetermined wavelength (or less than a predetermined value), and of measuring the radiation emitted by fluorescence from a surface area of the sample, characterized in that said surface area is diminished and focused onto a device capable of detecting and counting the individual light photons.

2. Device for the measurement of the fluorescence light emitted by a biological sample treated with a fluorescent reagent and situated in a container, characterized in that it comprises in combination:

- an illuminator capable of exciting the molecules of the fluorescent reagent;
- means for the collection and concentration of a beam of the fluorescence radiation emitted by a part of the surface of the sample; and
- an avalanche photodiode disposed at the focus of said collection and concentration means.

3. Device according to claim 1, characterized in that said beam of the fluorescence radiation emitted is substantially cylindrical.

4. Device according to claims 2 , characterized in that said collection and concentration means comprise an optical system which constitutes an inverted or invert microscope.

5. Device according to claim 3, characterized in that said invert microscope is of the reflection type.

6. Device according to claim 3, characterized in that said invert microscope is of the refraction type.

7. Device according to claim 3, characterized in that said invert microscope is of the mixed or catadioptric type.

8. Device according to claim 5, characterized in that said reflection invert microscope comprises two opposite curved mirrors, the larger of which is perforated, while the smaller is disposed on the radius which passes through the perforation of said mirror in accordance with a Cassegrain configuration.

9. Device according to olaim 3, characterized in that said microscope comprises a single block of transparent optical material with two opposite and metallized curved surfaces so as to form mirrors reflecting towards the optical material, one of the two metallizations exhibiting a void area corresponding to the opposite metallization.

10. Device according to claim 2 , characterized in that said avalanche photodiode is connected to a photon counter circuit capable of emitting a pulse for each photon which strikes the surface of the photodiode.

11. Device according to claim 7, characterized in that said counter circuit is connected to a logic circuit for processing the pulses.

12. Device for the measurement of the fluorescence light emitted by a biological sample treated with a fluorescent reagent and situated in a container, characterized in that it comprises in combination:

- an illuminator capable of exciting the molecules of the fluorescent reagent;
- means for the collection and concentration of a beam of the fluorescence radiation emitted by a part of the surface of the sample; and
- a photodiode for the detection of individual photons, which is disposed at the focus of said collection and concentration means.

13. Apparatus according to claim 2 , characterized in that the excitation and the reading of the test tubes can take place either through the free surfaces or through the walls of the test tubes transparent to the illumination and the fluorescence radiations.

FIG. 1

FIG. 2

FIG. 3